(19) 

Europäisches
Patentamt

European
Patent Office

Office européen
des brevets

(11) **EP 4 328 567 A1**

(12) **EUROPEAN PATENT APPLICATION**
published in accordance with Art. 153(4) EPC

(43) Date of publication:
**28.02.2024 Bulletin 2024/09**

(21) Application number: **22791497.5**

(22) Date of filing: **28.03.2022**

(51) International Patent Classification (IPC):
***G01N 21/17*** (2006.01)     ***G01N 21/45*** (2006.01)

(52) Cooperative Patent Classification (CPC):
**G01N 21/17; G01N 21/45;** G03H 1/0443;
G03H 1/0866; G03H 2001/0875

(86) International application number:
**PCT/JP2022/014972**

(87) International publication number:
**WO 2022/224722 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.04.2021  JP 2021072083**

(71) Applicant: **FUJIFILM Corporation
Tokyo 106-8620 (JP)**

(72) Inventors:
• **TANI, Takeharu
  Ashigarakami-gun, Kanagawa 258-8577 (JP)**
• **OSAKI, Ryusuke
  Ashigarakami-gun, Kanagawa 258-8577 (JP)**

(74) Representative: **Klunker IP
Patentanwälte PartG mbB
Destouchesstraße 68
80796 München (DE)**

(54) **METHOD FOR ACQUIRING EVALUATION VALUE**

(57)     Provided is a method for acquiring an evaluation value that can suppress an influence caused by an orientation of an object to be evaluated on an evaluation value derived based on a phase image of the object to be evaluated.

The method for acquiring an evaluation value includes generating a phase image showing a phase distribution of light transmitted through an object, deriving an evaluation value of the object based on the phase image, and correcting the evaluation value by using a correction coefficient determined in accordance with an orientation of the object in the phase image.

**FIG. 3**

ACQUIRE INTERFERENCE IMAGE — S1

GENERATE PHASE IMAGE — S2

DERIVE EVALUATION VALUE — S3

DERIVE CORRECTION COEFFICIENT — S4

CORRECT EVALUATION VALUE BY USING CORRECTION COEFFICIENT — S5

EP 4 328 567 A1

**Description**

**BACKGROUND OF THE INVENTION**

1. Field of the Invention

The disclosed technology relates to a method for acquiring an evaluation value for evaluating an object.

2. Description of the Related Art

The following technologies are known as technologies related to a cell evaluation method using a digital holography technology. For example, WO2019/176427A describes a determination method for generating a phase difference image of a cell from a hologram obtained by capturing the cells which are an aggregate of a plurality of cells and determining a state of a cell based on the phase difference image and a shape index value corresponding to a shape of the cell.

JP2012-531584A describes a method including a step of reconstructing phase and/or amplitude information of an object wave front from interference fringes formed by superimposing object light and reference light, and a step of measuring a parameter indicating quality of an embryo or an egg from the phase and/or amplitude information.

**SUMMARY OF THE INVENTION**

A phase image generated based on an interference image formed by interference between object light transmitted through a cell and reference light coherent to the object light is an image showing a phase distribution of the object light transmitted through the cell, and a state of the cell is reflected. Accordingly, quality of the cell can be evaluated based on the phase image. For example, a total phase amount obtained by integrating and accumulating phase amounts for pixels of the phase image can be used as an evaluation value of the cell.

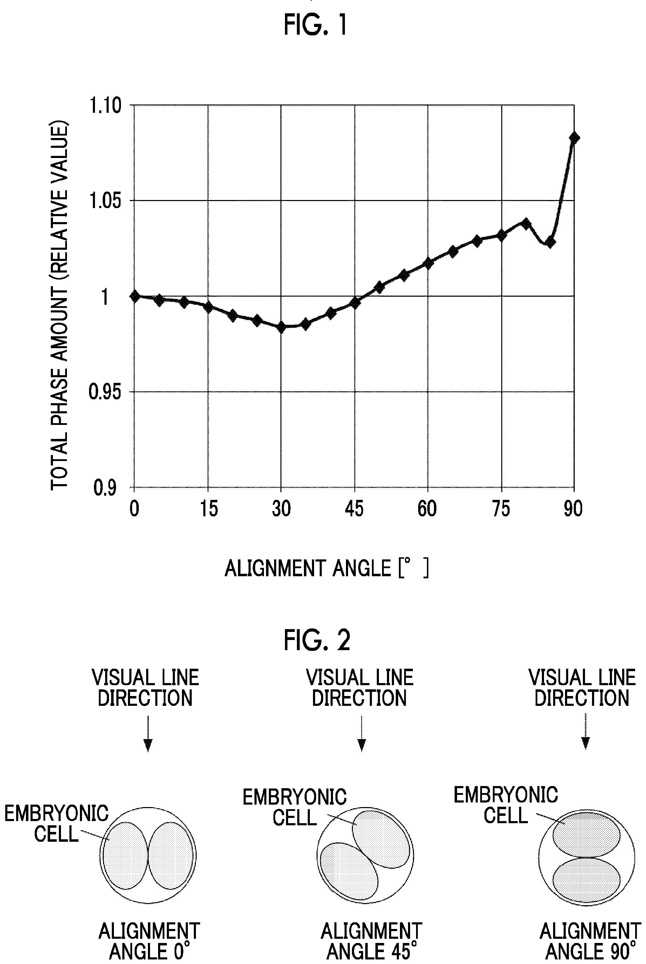

However, it has been found that in a case where the cell is a non-spherical object, the total phase amount changes depending on an orientation (alignment angle) of the cell in the phase image. Fig. 1 is a graph representing an example of a relationship between a relative value of a total phase amount derived from a phase image of an embryonic cell in a two-cell stage and an orientation (alignment angle) of the embryonic cell in the phase image. It should be noted that, in the present specification, the alignment angle means an angle formed by a plane in which pixels of the phase image project and a direction in which two cells constituting the embryonic cell are arranged. Fig. 2 illustrates a visual line direction with respect to the embryonic cell in a case where the alignment angles are 0°, 45°, and 90°. From Fig. 1, it can be understood that the total phase amount changes in accordance with a change in the orientation (alignment angle) of the embryonic cell in the phase image.

Since the orientation (alignment angle) of the cell in the phase image is random, a variation in the total phase amount becomes large in a case where the total phase amount changes in accordance with the alignment angle. As a result, accuracy of the quality evaluation of the cell based on the total phase amount deteriorates. In a case where the total phase amount is used for the evaluation of the cell, it is preferable that the total phase amount derived for an identical cell is a constant value independent of the alignment angle.

The disclosed technology has been made in view of the above points, and an object thereof is to suppress an influence caused by an orientation of an object to be evaluated on an evaluation value derived based on a phase image of the object.

A method for acquiring an evaluation value according to the disclosed technology includes generating a phase image showing a phase distribution of light transmitted through an object, deriving an evaluation value of the object based on the phase image, and correcting the evaluation value by using a correction coefficient determined in accordance with an orientation of the object in the phase image.

The phase image may be generated based on an interference image formed by interference between object light transmitted through the object and reference light coherent to the object light. The evaluation value may be a total phase amount obtained by integrating and accumulating phase amounts for pixels of the phase image.

A virtual object simulating a shape, a dimension, and a refractive index of the object may be created based on the phase image, and the correction coefficient may be derived by using the virtual object. A virtual phase image showing a phase distribution of light transmitted through the virtual object may be generated, a virtual total phase amount obtained by integrating and accumulating phase amounts for images of the virtual phase image may be derived, a standard total phase amount obtained by multiplying a volume of the virtual object and a refractive index of the virtual object may be derived, and a ratio between the virtual total phase amount and the standard total phase amount may be derived as the correction coefficient.

The correction coefficient may be derived for each of cases where orientations of the virtual object are different, and a correction value of the evaluation value may be acquired by multiplying the evaluation value by the correction coefficient corresponding to the orientation of the object in the phase image used in a case where the evaluation value is derived.

The object may be a cell. The object may be an embryonic cell in a two-cell stage, and the virtual object may have a three-dimensional structure in which two ellipsoids are connected.

According to the disclosed technology, the influence caused by the orientation of the object to be evaluated on the evaluation value derived based on the phase image of the object can be suppressed.

## BRIEF DESCRIPTION OF THE DRAWINGS

Fig. 1 is a graph representing an example of a relationship between a relative value of a total phase amount derived from a phase image of an embryonic cell and an orientation of the embryonic cell in the phase image.

Fig. 2 is a diagram illustrating a visual line direction with respect to the embryonic cell in the phase image in a case where alignment angles are 0°, 45°, and 90°.

Fig. 3 is a flowchart illustrating an example of a flow of a method for acquiring an evaluation value according to an embodiment of the disclosed technology.

Fig. 4 is a diagram illustrating an example of a configuration of a holography apparatus according to the embodiment of the disclosed technology.

Fig. 5 is a diagram illustrating an example of an interference image of an embryonic cell in a two-cell stage.

Fig. 6 is a diagram illustrating an example of a phase image of a cell generated based on the interference image illustrated in Fig. 5.

Fig. 7 is a diagram illustrating a concept of the phase image according to the embodiment of the disclosed technology.

Fig. 8 is a flowchart illustrating an example of a method for deriving a correction coefficient according to the embodiment of the disclosed technology.

Fig. 9 is a diagram illustrating an example of a phase image used in a case where a virtual object is created.

Fig. 10 is a diagram illustrating an example of a virtual phase image and an amplitude image generated for each of cases where an alignment angle of the virtual object is changed from 0° to 90° in 10° increments.

Fig. 11 is a graph representing an example of a correction coefficient for each alignment angle according to the embodiment of the disclosed technology.

Fig. 12 is a diagram illustrating an example of a result of specifying the alignment angle in the phase image of the embryonic cell.

Fig. 13A is a graph representing an example of a state of variation in a total phase amount before correction processing.

Fig. 13B is a graph representing an example of a state of variation in the total phase amount after the correction processing.

## DESCRIPTION OF THE PREFERRED EMBODIMENTS

Hereinafter, an example of an embodiment of the disclosed technology will be described with reference to the drawings. It should be noted that, the same or equivalent components and portions in the drawings are assigned by the same reference numerals, and the overlapping description will be omitted.

A method for acquiring an evaluation value according to an embodiment of the disclosed technology includes generating a phase image showing a phase distribution of light transmitted through an object to be evaluated, deriving an evaluation value of the object based on the phase image, and correcting the evaluation value by using a correction coefficient determined in accordance with an orientation of the object in the phase image.

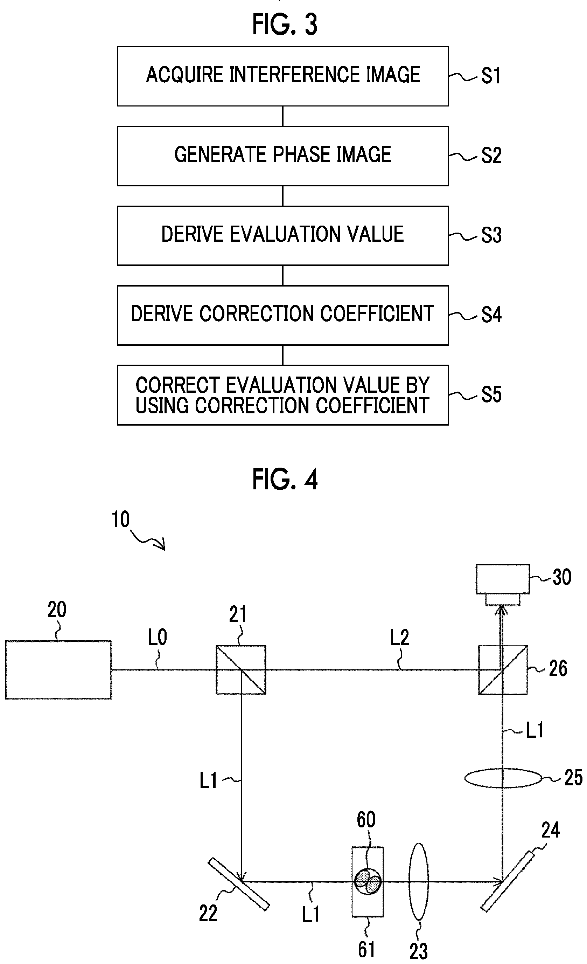

Fig. 3 is a flowchart illustrating an example of a flow of a method for acquiring an evaluation value according to the present embodiment. In step S1, an interference image (hologram) formed by interference between object light transmitted through an object to be evaluated and reference light coherent to the object light is acquired. In step S2, a phase image is generated based on the interference image acquired in step S1. In step S3, an evaluation value for evaluating a state of the object to be evaluated is derived based on the phase image generated in step S2. In step S4, correction coefficients for correcting the evaluation value are derived. In step S5, the evaluation value derived in step S3 is corrected by using the correction coefficients derived in step S4. Hereinafter, each of the above steps will be described in detail.

(Acquisition of interference image: step S1)

A method for acquiring the interference image will be described below. Fig. 4 is a diagram illustrating an example of a configuration of a holography apparatus 10 for generating an interference image for the object to be evaluated. Hereinafter, a case where the object to be evaluated is an embryonic cell in a two-cell stage will be described as an example.

The holography apparatus 10 includes a splitter 21, reflection mirrors 22 and 24, an objective lens 23, an imaging lens 25, a combiner 26, and an imaging apparatus 30. A cell 60 to be evaluated is disposed between the reflection mirror 22 and the objective lens 23 in a state where the cell is accommodated in a container 61 together with a culture solution.

For example, a HeNe laser having a wavelength of 632.8 nm can be used as a laser light source 20. Laser light L0 which linearly polarized light emitted from the laser light source 20 is divided into two laser light rays by the splitter 21. One of the two laser light rays is object light L1 and the other is reference light L2. A beam splitter can be used as the splitter 21. The object light L1 is incident on the reflection mirror 22. The cells 60 are irradiated with the object light L1 of which a traveling direction is bent by the reflection mirror 22.

An image due to the object light L1 transmitted through the cells 60 is magnified by the objective lens 23. The object light L1 transmitted through the objective lens 23 is bent in the traveling direction by the reflection mirror 24 and is incident on the combiner 26 through the imaging lens 25. On the other hand, the reference light L2 is also incident on the combiner 26. The object light L1 and the reference light L2 are combined by the combiner 26 and are imaged on an imaging surface of the imaging apparatus 30. A beam splitter can be used as the combiner 26.

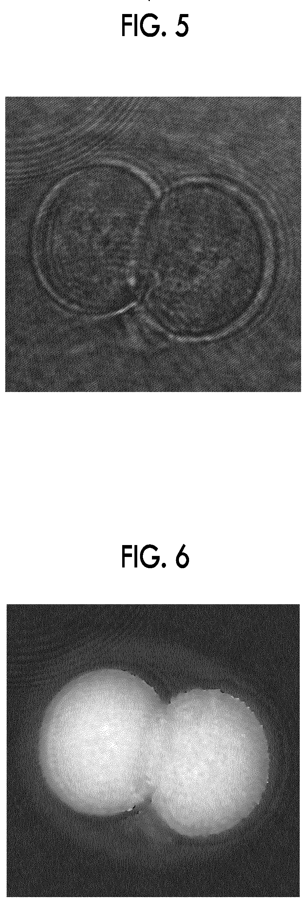

The interference image (hologram) generated by the interference between the object light L1 and the reference light L2 is imaged by the imaging apparatus 30. The imaging apparatus 30 comprises an imaging element such as a complementary metal-oxide-semiconductor (CMOS) image sensor, and generates image data of the interference image. Fig. 5 is a diagram illustrating an example of the interference image of the embryonic cell in the two-cell stage.

(Generation of phase image: step S2)

An example of a method for acquiring the phase image from the interference image will be described below. First, an interference image (hologram) of the cell 60 acquired by the imaging apparatus 30 is trimmed to have a size of, for example, $2048 \times 2048$, and is then subjected to a two-dimensional Fourier transform. A Fourier-transformed image obtained by this processing may include an image based on direct light, object light, and conjugated light.

Subsequently, a position of the object light is specified by specifying a deviation amount of the object light with respect to the direct light in the Fourier-transformed image, and a complex amplitude component of only the object light is extracted by frequency filtering processing using a mask of a circular opening having a radius of 250 pixels.

Subsequently, for example, an angular spectrum method is applied to restore the image showing the phase of the cell 60 at any spatial position. Specifically, an angular spectrum $U(f_x, f_y; 0)$ of the Fourier-transformed image of a wave front $u(x, y; 0)$ captured by the imaging surface of the imaging apparatus 30 is obtained. Subsequently, as represented in Equation (1) below, the angular spectrum $U(f_x, f_y; 0)$ is multiplied by a transfer function $H(f_x, f_y; z)$, and thus, a wave front at any position z in an optical axis direction (z direction) is reproduced. Here, the transfer function $H(f_x, f_y; z)$ is a frequency response function (Fourier transform of an impulse response function (green function)).

$$U\left(f_x, f_y; z\right) = U\left(f_x, f_y; 0\right) H\left(f_x, f_y; z\right), \quad H = e^{\frac{z \cdot 2\pi}{\lambda} \sqrt{1 - (\lambda f_x)^2 - (\lambda f_y)^2}} \quad \cdots (1)$$

Subsequently, as represented in Equation (2) below, an inverse Fourier transform is performed on a wave front $U(f_x, f_y; z)$ at the position z in the optical axis direction (z direction), and thus, a solution $u(x, y; z)$ at the position z is derived.

$$\begin{aligned} u(x, y; z) &= F^{-1}\left[U\left(f_x, f_y; z\right)\right] \\ &= F^{-1}\left[U\left(f_x, f_y; 0\right) H\left(f_x, f_y; z\right)\right] \quad \cdots (2) \\ &= F^{-1}\left[F\left[u(x, y; 0)\right] H\left(f_x, f_y; z\right)\right] \end{aligned}$$

Subsequently, the phase image is generated by deriving a phase $\varphi$ for u(x, y; z) as represented in Equation (3) below.

$$\phi = \arctan\left(\frac{\mathrm{Im}(u)}{\mathrm{Re}(u)}\right) \quad \cdots (3)$$

A phase in the phase image before unwrapping obtained by the above processing is wrapped to a value of 0 to $2\pi$. Therefore, for example, portions of $2\pi$ or more are joined by applying a phase connection (unwrapping) method such as unweighted least squares or Flynn's algorithm, and thus, a final phase image can be obtained. It should be noted that, many unwrapping methods have been proposed, and an appropriate method that does not cause phase mismatch may be appropriately selected. Fig. 6 is a diagram illustrating an example of the phase image of the cell 60 generated based on the interference image illustrated in Fig. 5.

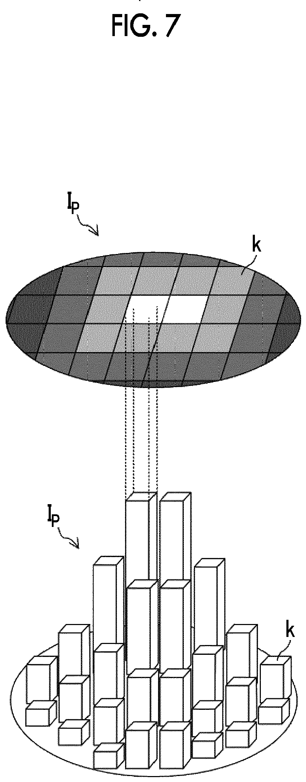

Fig. 7 is a diagram illustrating a concept of a phase image $I_P$. In a lower part of Fig. 7, a phase amount at each pixel k of the phase image $I_P$ is three-dimensionally displayed. In an upper part of Fig. 7, the phase amount at each pixel k of the phase image $I_P$ is illustrated on a plane in gray scale.

Here, in a case where a phase of a background (region where the cell 60 is not present) present in the same focal plane of the phase image $I_P$ is $P_B$ and a phase of a region where the cell 60 is present is $P_S$, a phase amount P in the phase image $I_P$ is represented by Equation (4) below. In addition, the term "phase" in the present specification is a phase of an electric field amplitude in a case where light is regarded as an electromagnetic wave, and is used in a more general sense.

$$P = P_S - P_B \quad \cdots (4)$$

In addition, a phase amount $P_k$ at each pixel k of the phase image $I_P$ can be represented by Equation (5) below. Here, $n_k$ is a difference between a refractive index of the cell 60 at a portion corresponding to each pixel k of the phase image $I_P$ and a refractive index of the surroundings of the cell, $d_k$ is a thickness of the cell 60 at the portion corresponding to each pixel k of the phase image $I_P$, and $\lambda$ is a wavelength of the object light in a hologram optical system.

$$P_k = 2\pi \frac{n_k \cdot d_k}{\lambda} \quad \cdots (5)$$

(Derivation of evaluation value: step S3)

The phase image of the cell 60 is an image showing a phase distribution of the object light L1 transmitted through the cell 60, and is also an image showing an optical path length distribution of the object light transmitted through the cell 60. Since an optical path length in the cell 60 corresponds to a product of a difference in the refractive index between the cell 60 and the surroundings of the cell the thickness of the cell 60, the phase image of the cell 60 includes information on the refractive index and the thickness (shape) of the cell 60 as represented in Equation (5). Since the state of the cell 60 is reflected in the phase image of the cell 60, the quality of the cell 60 based on the phase image can be evaluated. Specifically, a total phase amount $P_A$ can be used as the evaluation value of the cell 60.

The total phase amount $P_A$ is represented by Equation (6) below. Here, s is an area of each pixel k of the phase image, and $v_k$ is a volume of the cell 60 at the portion corresponding to each pixel k of the phase image. As represented in Equation (6), the total phase amount $P_A$ corresponds to an amount obtained by integrating and accumulating the phase amounts $P_k$ for the pixels of the phase image of the cell 60 for all the pixels k. The pixel value of the phase image corresponds to the phase amount $P_k$.

$$P_A = \sum_{k=0}^{N} P_k \cdot s = \frac{2\pi}{\lambda} \sum_{k=0}^{N} n_k \cdot d_k \cdot s = \frac{2\pi}{\lambda} \sum_{k=0}^{N} n_k \cdot v_k \quad \cdots (6)$$

(Deviation of correction coefficient: step S4)

As illustrated in Fig. 1, the total phase amount $P_A$ changes depending on an orientation (alignment angle) of the cell 60 in the phase image. The orientation (alignment angle) of the cell 60 in the phase image corresponds to an orientation (alignment angle) of the cell 60 with respect to an optical axis of the object light L1. It is preferable that the total phase amount $P_A$ derived for the same cell 60 is a constant value independent of the alignment angle. The method for acquiring an evaluation value according to the present embodiment includes correcting the total phase amount $P_A$ as the evaluation value by using correction coefficients determined in accordance with the orientation (alignment angle) of the cell 60 in the phase image. An example of the method for deriving the correction coefficient will be described below.

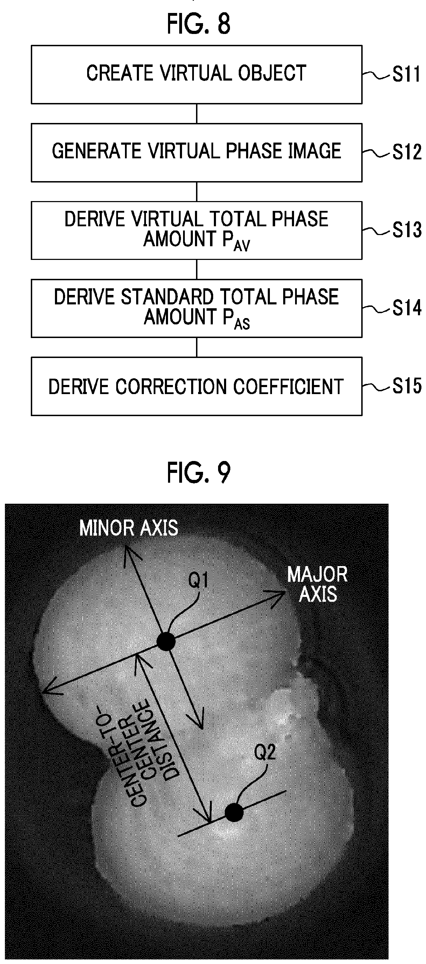

Fig. 8 is a flowchart illustrating an example of the method of deriving the correction coefficient. In step S11, a virtual object which is a three-dimensional model simulating a shape, dimensions, and refractive index of the object to be evaluated is created based on the phase image generated in step S2. Specifically, as illustrated in Fig. 9, a virtual object having a three-dimensional structure in which each of two cells constituting the embryonic cell, which is the object to be evaluated, included in the phase image is regarded as an ellipsoid and two ellipsoids are connected in a minor axis direction is created. A major axis, a minor axis, a center-to-center distance, and a refractive index n of the ellipsoid are measured from the phase image, and these pieces of information are applied to the virtual object. The refractive index n is a difference in refractive index with respect to a background (culture solution) and is represented by Equation (7). In Equation (7), $P_{Q1}$ is a phase amount (pixel value) at a point Q1 of the phase image, and $D_L$ is a thickness at the point Q1, that is, the major axis of the ellipsoid. The refractive index of the virtual object is uniform over the entire range.

$$n = P_{Q1}/D_L \;... \quad (7)$$

In step S12, a virtual phase image showing a phase distribution of light transmitted through the virtual object created in step S11 is generated. Specifically, an interference image is generated for the virtual object by using a numerical calculation method for calculating optical propagation, such as a finite-difference time-domain method (FDTD method). That is, the interference image of the virtual object is generated on a computer. Thereafter, the phase image is generated by performing the same processing as in step S2 on the interference image of the virtual object generated on the computer. The phase image generated for the virtual object is referred to as a virtual phase image in the present specification. It should be noted that, it is preferable that a focus position in a case where the virtual phase image is generated is determined by the same method as in a case where a focus position is determined in a case where the phase image is generated for the object to be evaluated. For example, a position where a variance of an amplitude image that can be generated from the interference image is minimized can be determined as the focus position.

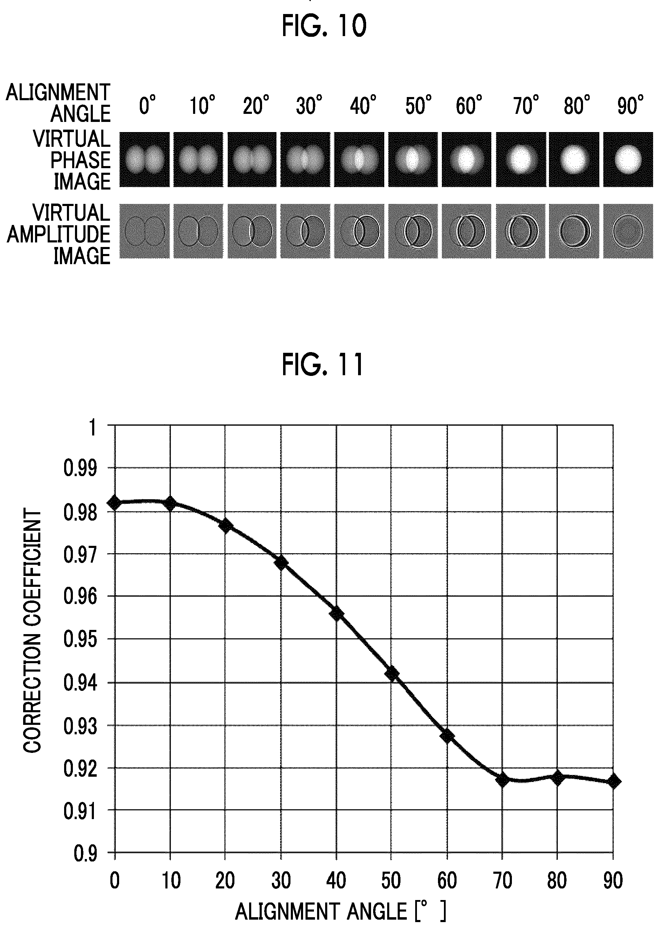

The virtual phase image is generated for each of cases where an orientation (alignment angle) of the virtual object is changed. Fig. 10 is a diagram illustrating an example of a virtual phase image and a virtual amplitude image generated for each of cases where the orientation (alignment angle) of the virtual object is changed from 0° to 90° in 10° increments.

In step S13, a total phase amount is derived by performing the same processing as in step S3 on the virtual phase image generated in step S12. That is, the total phase amount is derived by applying Equation (6) to the virtual phase image. The total phase amount derived for the virtual phase image is referred to as a virtual total phase amount $P_{AV}$ in the present specification. The virtual total phase amount $P_{AV}$ is derived for each of the cases where the orientation (alignment angle) of the virtual object is changed.

In step S14, a standard total phase amount $P_{AS}$ is derived for the virtual object. The standard total phase amount $P_{AS}$ is a standard value of the total phase amount in the virtual object and is represented by Equation (8) below. In Equation (8), n is a difference in refractive index between the virtual object and the surroundings, and V is a volume of the virtual object. The standard total phase amount $P_{AS}$ is constant regardless of the orientation (alignment angle) of the virtual object.

$$P_{AS} = n \times V \;... \quad (8)$$

In step S 15, a ratio of the virtual total phase amount $P_{AV}$ derived in step S13 to the standard total phase amount

$P_{AS}$ derived in step S14 is derived as a correction coefficient C. That is, the correction coefficient C is expressed by Equation (9) below. The correction coefficient C is derived for each of the cases where the orientation (alignment angle) of the virtual object is changed by using the virtual total phase amount $P_{AV}$ derived for each of the cases where the orientation (alignment angle) of the virtual object is changed.

$$C = P_{AS}/P_{AV} \ldots \quad (9)$$

Fig. 11 is a graph representing an example of the correction coefficient for each alignment angle derived by performing the above each processing.

(Correction of evaluation value: step S5)

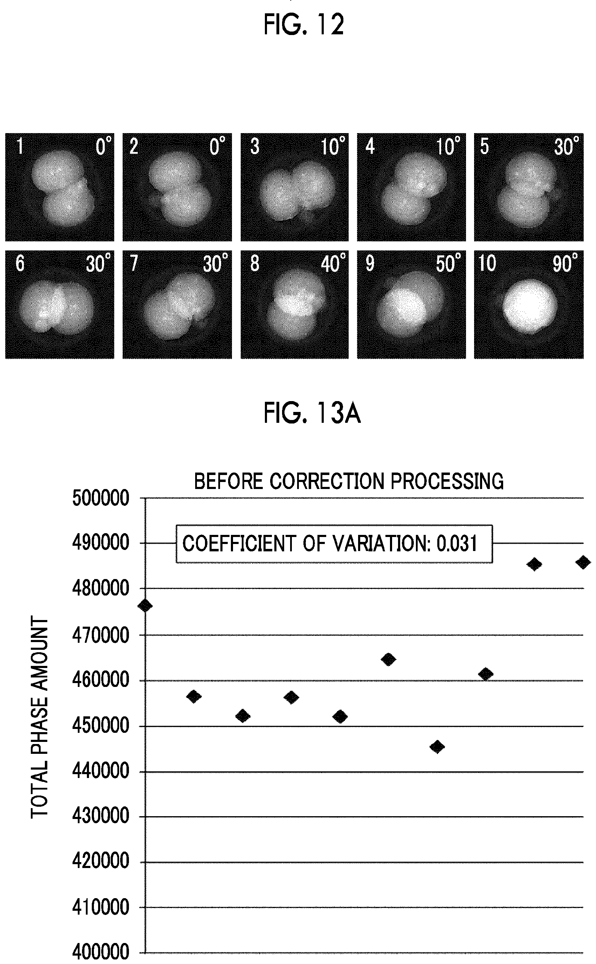

The total phase amount $P_A$ as the evaluation value derived in step S3 is corrected by using the correction coefficients C derived in step S4. Specifically, the orientation (alignment angle) of the object to be evaluated is specified in the phase image used in a case where the total phase amount $P_A$ is derived for the object. Fig. 12 is a diagram illustrating an example of a result of specifying the orientation (alignment angle) of the embryonic cell in the phase image. It should be noted that, the orientation (alignment angle) of the object may be specified visually or may be specified by using a known image recognition technology.

Subsequently, the correction coefficient C corresponding to the specified orientation (alignment angle) of the object is extracted from among the correction coefficients C derived in step S4. Then, a correction value Px is acquired by multiplying the extracted correction coefficient C by the total phase amount $P_A$ as the evaluation value derived in step S3. That is, the correction value of the total phase amount $P_A$ is expressed by Equation (10) below.

$$P_X = C \times P_A \ldots \quad (10)$$

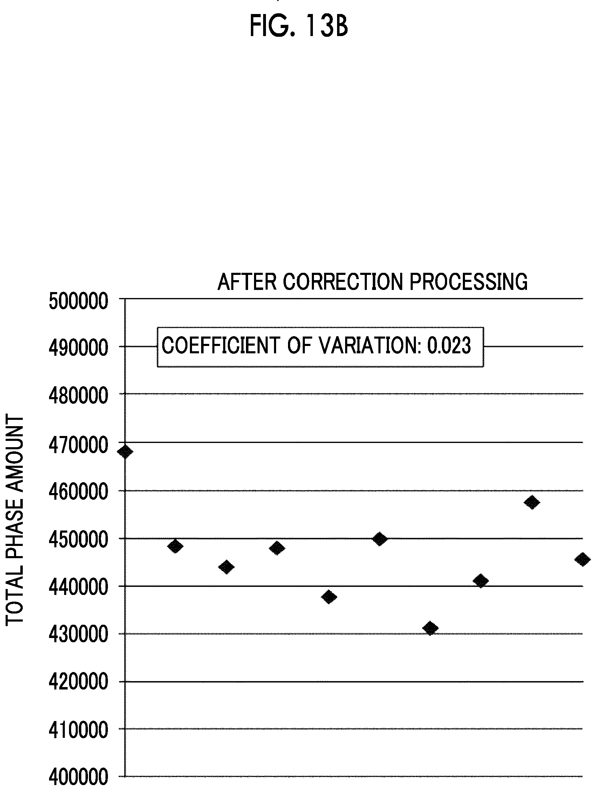

Fig. 13A and Fig. 13B are graphs representing examples of a state of a variation of the total phase amount derived based on the phase image of the same embryonic cell, respectively, Fig. 13A is a graph before correction processing, and Fig. 13B is a graph after the correction processing. It should be noted that, each plot in the graph is derived based on each of the phase images illustrated in Fig. 12. As is clear from a comparison between Figs. 13A and 13B, the variation in the total phase amount was reduced by performing the correction processing. Specifically, a coefficient of variation of the total phase amount after the correction processing was 0.031, whereas a coefficient of variation of the total phase amount after the correction processing was 0.023.

As described above, according to the method for acquiring an evaluation value according to the disclosed technology, an influence caused by the orientation of the object on the evaluation value derived based on the phase image of the object to be evaluated can be suppressed. Accordingly, the evaluation value can be stably acquired, and the variation in the evaluation value can be suppressed.

It should be noted that, in the present embodiment, a case where the evaluation target is the cell has been illustrated, but the disclosed technology is not limited to this aspect. The disclosed technology is not limited to the cell, and any object including an industrial product having transparency to the object light can be evaluated. The disclosed technology is particularly effective in a case where the shape of the object to be evaluated is a non-spherical object. In addition, in the present embodiment, the total phase amount has been described as the evaluation value for evaluating the state of the object, but the disposed technology is not limited to this aspect. For example, a phase density obtained by dividing the total phase amount by the volume of the object, an average phase amount which is an average value of pixel values in the phase image, a maximum phase amount which is a maximum value of the pixel value in the phase image, a variance of the pixel values in the phase image, and the like can also be used as the evaluation value.

It should be noted that, the disclosure of Japanese Patent Application No. 2021-072083 filed on April 21, 2021 is incorporated herein by reference in its entirety. In addition, all documents, patent applications, and technical standards described in the specification are incorporated herein by references to the same extent as the incorporation of the individual documents, patent applications, and technical standards by references are described specifically and individually.

**Claims**

1. A method for acquiring an evaluation value, comprising:

generating a phase image showing a phase distribution of light transmitted through an obj ect;
deriving an evaluation value of the object based on the phase image; and
correcting the evaluation value by using a correction coefficient determined in accordance with an orientation of the object in the phase image.

2. The method for acquiring an evaluation value according to claim 1,
wherein the phase image is generated based on an interference image formed by interference between object light transmitted through the object and reference light coherent to the object light.

3. The method for acquiring an evaluation value according to claim 1 or 2,
wherein the evaluation value is a total phase amount obtained by integrating and accumulating phase amounts for pixels of the phase image.

4. The method for acquiring an evaluation value according to any one of claims 1 to 3,
wherein a virtual object simulating a shape, a dimension, and a refractive index of the object is created based on the phase image, and the correction coefficient is derived by using the virtual object.

5. The method for acquiring an evaluation value according to claim 4,

wherein a virtual phase image showing a phase distribution of light transmitted through the virtual object is generated,
a virtual total phase amount obtained by integrating and accumulating phase amounts for images of the virtual phase image is derived,
a standard total phase amount obtained by multiplying a volume of the virtual object and a refractive index of the virtual object is derived, and
a ratio between the virtual total phase amount and the standard total phase amount is derived as the correction coefficient.

6. The method for acquiring an evaluation value according to claim 4 or 5,

wherein the correction coefficient for each of cases where orientations of the virtual object are different is derived, and
a correction value of the evaluation value is acquired by multiplying the evaluation value by the correction coefficient corresponding to the orientation of the object in the phase image used in a case where the evaluation value is derived.

7. The method for acquiring an evaluation value according to any one of claims 1 to 6,
wherein the object is a cell.

8. The method for acquiring an evaluation value according to any one of claims 4 to 6,

wherein the object is an embryonic cell in a two-cell stage, and
the virtual object has a three-dimensional structure in which two ellipsoids are connected.

# FIG. 1

# FIG. 2

# FIG. 3

| ACQUIRE INTERFERENCE IMAGE | ∼S1 |

| GENERATE PHASE IMAGE | ∼S2 |

| DERIVE EVALUATION VALUE | ∼S3 |

| DERIVE CORRECTION COEFFICIENT | ∼S4 |

| CORRECT EVALUATION VALUE BY USING CORRECTION COEFFICIENT | ∼S5 |

# FIG. 4

## FIG. 5

## FIG. 6

# FIG. 7

## FIG. 8

| | |
|---|---|
| CREATE VIRTUAL OBJECT | ~S11 |
| GENERATE VIRTUAL PHASE IMAGE | ~S12 |
| DERIVE VIRTUAL TOTAL PHASE AMOUNT $P_{AV}$ | ~S13 |
| DERIVE STANDARD TOTAL PHASE AMOUNT $P_{AS}$ | ~S14 |
| DERIVE CORRECTION COEFFICIENT | ~S15 |

## FIG. 9

## FIG. 10

| ALIGNMENT ANGLE | 0° | 10° | 20° | 30° | 40° | 50° | 60° | 70° | 80° | 90° |
|---|---|---|---|---|---|---|---|---|---|---|
| VIRTUAL PHASE IMAGE | | | | | | | | | | |
| VIRTUAL AMPLITUDE IMAGE | | | | | | | | | | |

## FIG. 11

# FIG. 12

# FIG. 13A

BEFORE CORRECTION PROCESSING

COEFFICIENT OF VARIATION: 0.031

# FIG. 13B

AFTER CORRECTION PROCESSING

COEFFICIENT OF VARIATION: 0.023

## INTERNATIONAL SEARCH REPORT

| International application No. |
|---|
| **PCT/JP2022/014972** |

**A.    CLASSIFICATION OF SUBJECT MATTER**

*G01N 21/17*(2006.01)i; *G01N 21/45*(2006.01)i
FI:    G01N21/17 A; G01N21/45 Z

According to International Patent Classification (IPC) or to both national classification and IPC

**B.    FIELDS SEARCHED**

Minimum documentation searched (classification system followed by classification symbols)

G01N21/00-G01N21/83; G03H1/00-G03H1/34; G01N21/17; C12Q1/00-1/24; C12M1/34; G01N33/48-G01N33/98

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2020/066348 A1 (FUJIFILM CORP) 02 April 2020 (2020-04-02) | 1-8 |
| A | WO 2019/176427 A1 (FUJIFILM CORP) 19 September 2019 (2019-09-19) | 1-8 |
| A | WO 2006/051813 A1 (HITACHI MEDICAL CORPORATION) 18 May 2006 (2006-05-18) | 1-8 |
| A | JP 2015-53879 A (DAINIPPON PRINTING CO LTD) 23 March 2015 (2015-03-23) | 1-8 |
| A | WO 2019/175959 A1 (SHIMADZU CORP) 19 September 2019 (2019-09-19) | 1-8 |
| A | WO 2020/188813 A1 (SHIMADZU CORP) 24 September 2020 (2020-09-24) | 1-8 |
| A | JP 2013-531787 A (ARRYX INC) 08 August 2013 (2013-08-08) | 1-8 |

☐ Further documents are listed in the continuation of Box C.        ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **02 June 2022** | **14 June 2022** |

| Name and mailing address of the ISA/JP | Authorized officer |
|---|---|
| **Japan Patent Office (ISA/JP)**
**3-4-3 Kasumigaseki, Chiyoda-ku, Tokyo 100-8915**
**Japan** | |
| | Telephone No. |

Form PCT/ISA/210 (second sheet) (January 2015)

**INTERNATIONAL SEARCH REPORT**
Information on patent family members

International application No.

**PCT/JP2022/014972**

| Patent document cited in search report | | | Publication date (day/month/year) | Patent family member(s) | | | Publication date (day/month/year) |
|---|---|---|---|---|---|---|---|
| WO | 2020/066348 | A1 | 02 April 2020 | US | 2021/0174507 | A1 | |
| | | | | EP | 3859006 | A1 | |
| WO | 2019/176427 | A1 | 19 September 2019 | US | 2020/0342599 | A1 | |
| | | | | EP | 3766984 | A1 | |
| WO | 2006/051813 | A1 | 18 May 2006 | US | 2008/0273786 | A1 | |
| | | | | EP | 1811017 | A1 | |
| | | | | CN | 101048492 | A | |
| JP | 2015-53879 | A | 23 March 2015 | US | 2016/0239957 | A1 | |
| | | | | WO | 2015/037406 | A1 | |
| | | | | EP | 3045528 | A1 | |
| WO | 2019/175959 | A1 | 19 September 2019 | (Family: none) | | | |
| WO | 2020/188813 | A1 | 24 September 2020 | (Family: none) | | | |
| JP | 2013-531787 | A | 08 August 2013 | US | 2013/0260396 | A1 | |
| | | | | WO | 2011/149525 | A1 | |
| | | | | EP | 2576759 | A2 | |
| | | | | CN | 103025859 | A | |
| | | | | JP | 2013-533469 | A | |
| | | | | US | 2013/0274119 | A1 | |
| | | | | WO | 2011/149526 | A2 | |
| | | | | EP | 2576805 | A1 | |
| | | | | CN | 103025886 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019176427 A
- JP 2012531584 A

- JP 2021072083 A